# EUROPEAN PATENT SPECIFICATION

(11) **EP 3 798 072 B1**
(45) Date of publication and mention of the grant of the patent: **13.10.2021**
(21) Application number: 19199898.8
(22) Date of filing: 26.09.2019
(51) Int. Cl.: B60T 13/68, B60T 17/22, B60T 8/17

(54) **BRAKE SYSTEM FOR A COMMERCIAL VEHICLE**
BREMSANLAGE FÜR EIN NUTZFAHRZEUG
SYSTÈME DE FREIN POUR UN VÉHICULE COMMERCIAL

(43) Date of publication of application: 31.03.2021
(73) Proprietor: Haldex Brake Products Aktiebolag, 261 24 Landskrona (SE)
(72) Inventor: HARRISON, Dudley, Solihull, B90 4YP (GB)
(74) Representative: REHBERG HÜPPE + PARTNER

(56) References cited:
- WO-A1-92/13740
- WO-A1-95/16594
- WO-A1-03/033321
- DE-A1- 10 236 921
- DE-A1-102010 050 578
- DE-A1-102016 010 462

## Description

### TECHNICAL FIELD OF THE INVENTION

The present invention relates to a brake system for a commercial vehicle which might be a tractor or a trailer wherein the brake system is responsible for controlling the brake pressure for one single pneumatic brake actuator at a specific wheel end, pneumatic brake actuators at two wheel ends of an axle of the commercial vehicle, for controlling pneumatic brake actuators arranged at wheel ends of one single brake circuit or arranged at a vehicle side or for controlling pneumatic brake actuators at wheel ends of a plurality of axles.

### PRIOR ART

During normal operation conventional EBS brake systems electrically control an electro-pneumatic brake pressure for the brake actuators of the vehicle. The electrical control allows a modulation of the electro-pneumatic brake pressure for a slip control and traction control and the consideration of other driving and vehicle parameters. The conventional EBS brake systems include a redundancy function which for an inactive electric control creates a pneumatic brake pressure as a backup pressure which is transmitted to the pneumatic brake actuator in the backup mode. The backup brake pressure is created purely pneumatic in dependency on the depression of a foot brake pedal by the driver.

WO 92/13740 A1 discloses the control of a trailer braking valve (embodied as a relay valve) via two redundant trailer break control paths, namely a mechanical-pneumatic break control path and an electro pneumatic break control path. A foot brake pedal unit comprises a foot brake pedal sensor providing an electric foot brake pedal depression signal. The electric foot brake pedal depression signal is supplied to a trailer EBS unit. The trailer EBS unit electrically controls a 2/2-solenoid valve which is closed when not energized and which biases the control port of the trailer braking valve with a supply pressure when energized. Furthermore, the trailer EBS unit controls a 2/2-solenoid valve which is closed when not energized and which exhausts the control port of the trailer braking valve when energized. On the basis of the foot brake pedal depression signal the trailer EBS unit is able to control the control port of the trailer braking valve according to the brake demand of the driver. The trailer EBS unit also controls a 2/2-solenoid valve which is open when not energized for providing a connection of the control port of the trailer braking valve to the foot brake pedal unit and which is closed when energized. During the electro-pneumatic control of the trailer braking valve by the trailer EBS unit via the 2/2-solenoid valves the 2/2-solenoid valve is energized so that the mechanical-pneumatical brake path is closed. In the case of power failure or fault shutdown, the 2/2-solenoid valves assume the closed positions whereas the 2/2-solenoid valve assumes the open position. In this open position, the mechanical-pneumatical brake path is activated wherein the foot brake pedal of the foot brake pedal unit controls a proportional valve of the foot brake pedal unit for generating a pneumatic brake control pressure which is transferred via the 2/2-solenoid valve to the control port of the trailer braking valve. Accordingly, the mechanical-pneumatical brake path provides a fallback for the control of the trailer braking valve in the case of a power failure or fault shutdown. For another embodiment the switching between the electro-pneumatical brake path and the mechanical-pneumatical brake path is provided by a 3/2-solenoid valve which in one position connects the control port of the trailer braking valve to the 2/2-solenoid valves and in the other, non-energized state connects the control port of the trailer breaking valve to the proportional valve of the foot brake pedal unit.

WO 95/16594 A1 discloses a brake pressure modulator generating a brake control pressure for a control port of a trailer control valve for controlling the brakes of a trailer or for a control port of a relay valve for controlling the service brakes of a rear axle. The brake pressure modulator comprises a fail-safe valve embodied as a 3/2-solenoid valve. In the valve position not energized the fail-safe valve connects the control port of the trailer control valve or of the relay valve to the pneumatic control port of the foot brake pedal module. This mechanical-pneumatic brake path is closed by the 3/2-solenoid valve in the energized state. In this energized state, the control port of the trailer control valve or of the relay valve is biased by a control pressure controlled by a proportional valve which is electrically controlled by the CPU on the basis of an electric foot brake pedal depression signal.

Further prior art is known from WO 03/033321 A1**,** DE 102 36 921 A1**,** DE 10 2010 050 578 A1 **and** DE 10 2016 010 462 A1**.**

### OBJECT OF THE INVENTION

It is the object of the present invention to provide a brake system for a commercial vehicle which is in particular improved with respect to
- the modularity of the brake system,
- the brake performance,
- the safety,
- the brake force dynamics and
- the provision of a redundancy.

### SOLUTION

According to the present invention, the object of the invention is solved by the features of the independent claim. Additional preferred embodiments according to the invention are to be seen in the dependent claims.

### DESCRIPTION OF THE INVENTION

The inventive brake system comprises a pneumatic brake actuator which is arranged at a wheel end of a vehicle axle. The brake system comprises two parallel brake paths, namely an electro-pneumatic brake path and a redundancy brake path or pneumatic brake path. In the electro-pneumatic brake path an electro-pneumatic brake pressure is generated dependent on an electric brake control signal. Dependent on the control logic for the electric brake control signal the electro-pneumatic brake path e. g. allows
- a modulation of the electro-pneumatic brake pressure and/or
- the consideration of a wheel axle load or wheel end load and/or
- the control of the electro-pneumatic brake pressure for increasing the dynamic driving stability (in particular for controlling a pitching movement, a yaw movement and/or a tilting movement).

The electro-pneumatic brake path is in particular used in the normal driving mode and might provide the full functionality or an enhanced functionality. In the electro-pneumatic brake path an electronic control system creates the electric brake control signal for providing the before mentioned functionalities.

In the electro-pneumatic brake path at least one electric brake control signal biases at least one control port of a solenoid valve which might e. g. directly control the electro-pneumatic brake pressure or might be used as a pilot valve for controlling the electro-pneumatic brake pressure. In the electro-pneumatic brake path the created electro-pneumatic brake pressure might (additional to the aforementioned functions and dependencies) depend on a driver's brake demand. It is e. g. possible that a brake pedal unit comprises a brake pedal sensor which senses the displacement or angle of the foot brake pedal and creates an electric signal corresponding to the driver's brake demand. To mention only one further example the brake pedal unit might create a pneumatic brake pressure dependent on the position of the brake pedal and a sensor senses the created brake pressure. The electronic control system of the electro-pneumatic brake path then processes the created sensor signal for considering the driver's brake demand. However, it is alternatively or cumulatively possible that in the electro-pneumatic brake path the electro-pneumatic brake pressure is created by an autonomous driving system and/or by a vehicle safety system which might e. g. induce an emergency brake action for avoiding a possibly upcoming collision.

In the pneumatic brake path a pneumatic brake pressure is generated dependent on a driver's brake demand. Here, the pneumatic brake pressure is generated mechanically-pneumatically. In the simplest case a brake operation means (as a brake switch or a foot brake pedal) is actuated by the driver for creating a driver's brake demand. The mechanical movement of the brake switch or foot brake pedal then directly creates a pneumatic brake pressure which depends on the driver's brake demand. The brake switch or brake pedal might e. g. be mechanically coupled to a valve element of a valve creating the pneumatic brake pressure or a pilot pressure for the pneumatic brake pressure which is here also denoted as "pneumatic brake control pressure". The pneumatic brake path in particular has a functionality or performance which is reduced when compared to the functionality of the electro-pneumatic brake path. To mention only some non-limiting examples in the pneumatic brake path there might not be any modulation or slip or traction control and no modification of the pneumatic brake pressure for increasing the dynamic driving stability.

For a variant of the invention additional to the electro-pneumatic brake path there is a redundancy brake path. The redundancy brake path might be an additional electro-pneumatical brake path used for creating a redundancy brake pressure. In the redundancy brake path the redundancy brake pressure might e. g. be created on the basis of the electronic control of a solenoid valve (with a direct electronic control of the brake pressure or a control of the brake pressure by a pilot valve) which is controlled e. g. on the basis of an electric sensor signal of a brake pedal sensor and/or on the basis of an autonomous driving system. Accordingly, it is possible to create the brake pressure in two redundant ways, namely via the electro-pneumatic brake path on the one hand side and via the redundancy brake path on the other hand side.

The invention proposes the use of a fail-safe valve which selectively connects
- the electro-pneumatic brake path or
- the pneumatic brake path or redundancy brake path
to the pneumatic brake actuator. For this purpose the fail-safe valve comprises a first switching state and second switching state (where further switching states might be present or might not be present):

In the first switching state the fail-safe valve connects the electro-pneumatic brake path to the pneumatic brake actuator. Accordingly, in the first switching state of the fail-safe valve the pneumatic brake actuator is controlled by the electric brake control signal.

Instead, in the second switching state the fail-safe valve connects the pneumatic brake path or redundancy brake path to the pneumatic brake actuator so that the pneumatic brake actuator is mechanically-pneumatically controlled by the driver's brake demand or controlled by the redundancy brake path. The second switching state is preferably used as a redundancy mode or backup mode.

The fail-safe valve comprises an electric control port. By an energization of the electric control port by an electronic control system the fail-safe valve is transferred into the first switching state. Accordingly, the energization of the electric control port activates the electro-pneumatic brake path allowing the full function brake actuation.

Furthermore, the fail-safe valve comprises a return means, in particular a return spring. The return means returns the fail-safe valve from the first switching state into the second switching state when the electric control port of the fail-safe valve is not energized (which also covers an energization which is reduced when compared to the energization required for achieving the first switching state).

The inventive design of the brake system in particular provides the following functionalities and advantages (which are mentioned here as examples which are not intended for limiting the present invention to these functionalities and advantages):
- In the case that an electric power source supplies power a control system of the brake system is able to energize the electric control port of the fail-safe valve so that the electro-pneumatic brake path is activated. However, if the power source does not provide electric power or reduced electric power due to an electric power failure, the fail-safe valve is automatically returned by the return means into the second switching state so that the pneumatic brake path is activated. Accordingly, the brake system is redundant and allows a brake actuation (in some cases with a reduced functionality) also in the case of an electric power failure.
- If the brake system is normally operated in the first switching state of the fail-safe valve and so with the use of the electro-pneumatic brake path for controlling the pneumatic brake actuator, any detection of a failure or malfunction of a component in the electro-pneumatic brake path might be considered by removing the energization of the electric control port of the fail-safe valve even if there is no electric power failure of the electric power source. Accordingly, in the case of a failure or malfunction of the electro-pneumatic brake path the pneumatic brake path or the redundancy brake path takes over.

Differing from a conventional EBS brake system the inventive design for one embodiment allows the use of a specific and individual electro-pneumatic brake path or redundancy brake path which is only responsible for one single pneumatic brake actuator arranged at a wheel and of a vehicle axle whereas for other pneumatic brake actuators other specific or individual independent electro-pneumatic brake paths or redundancy brake paths might be used. Within the frame of the invention it is also possible that the electrically controlled valves in the electro-pneumatic brake path might be arranged at the axle and/or at the wheel end or in close neighborhood to the wheel end (in particular with the distance of less than 1 m from the wheel end or from the pneumatic brake actuator).

On the other hand differing from conventional EBS brake systems the switching between the normal operation and the redundancy operation is not performed on the pilot pressure side by a change from an electric control of a pilot pressure to the pneumatic control of the pilot pressure by the brake pedal unit as being the case for the conventional EBS brake system. Instead, both the electro-pneumatic brake path as well as the pneumatic brake path or redundancy brake path create brake pressures that are directly transmitted via the fail-safe valve to the brake chamber of the pneumatic brake actuator.

Finally, in conventional EBS brake systems the brake actuators are often biased by the brake pressure via a 2/2-way valve which only allows to hold the brake pressure in the brake actuator in the closed position and allows a pressure increase or decrease by at least one additional valve in the open position of the 2/2-way valve. Instead, in the inventive brake system the fail-safe valve comprises the first switching state and the second switching state which switch the creation of the brake pressure between the electro-pneumatic brake path and the pneumatic brake path or redundancy brake path.

As mentioned above, in the inventive brake system the fail-safe valve might be any valve including also a valve assembly with a plurality of individual valves unless the fail-safe valve provides the first switching state and the second switching state with or without additional switching states. For one proposal of the brake system the fail-safe valve is a 3/2-solenoid valve providing the first switching state and the second switching state.

Within the frame of the present invention in the electro-pneumatic brake path any single valve, any group of valves or any valve assembly can be used provided that at least one valve is electrically controlled for modifying the electro-pneumatic brake pressure. For one embodiment the electro-pneumatic brake path comprises a pivoting anchor valve.

A "pivoting anchor valve" in the sense of the present invention in particular is a valve which fulfills one of the following conditions, a plurality or any number of the following conditions or all of the following conditions:
- The pivoting anchor valve comprises a pivoting anchor which forms the valve body or is coupled to the valve body, the valve body moving relatively to a valve seat between a closed position and at least one open position. The pivoting anchor can be pivoted by an electro-magnetic actuation into different pivoting positions which correlate with different valve positions (at least two valve positions). Alternatively or cumulatively, it is possible that by the electro-magnetic actuation the pivoting anchor and/or the valve body can be held in at least one of the different valve positions. It is possible that the pivoting anchor is biased with a bending moment due to the electro-magnetic actuation. The pivoting anchor or a holding device of the same comprises a flexible element or flexible section being flexible with respect to a bending by the bending moment applied by the electromagnet. A changed pivoting position or operating position of the pivoting anchor valve correlates with a changed bending of the pivoting anchor or the holding device achieved by the electro-magnetic actuation. With respect to possible exemplary embodiments of a pivoting anchor valve of this type comprising a flexible bending element reference is e.g. made to the patent publications EP 2 756 215 B1, EP 2 049 373 B1, EP 2 567 131 B1 and EP 1 303 719 B1 and the patent applications with the application numbers GB 1 719 309.5, GB 1 904 957.6, GB 1 820 137.6, GB 1 806 527.6, GB 1 719 415.0 and GB 1 719 344.2.
   However, it is also possible that the pivoting anchor valve comprises a pivoting anchor which is supported for being pivoted by a bearing. The pivoting anchor can be pivoted by electromagnets into different operating positions or held in the same. The different operating positions correlate with different valve positions of the pivoting anchor valve. With respect to embodiments of this type, exemplary reference is made to the publications WO 2016/062542 A1 and EP 3 222 897 A1.
- A pivoting anchor valve might also be denoted as "fast acting brake valve" (abbreviated "FABV"). An FABV allows a fast actuation with a fast change of the operating position wherein a change of the operating position might e.g. be achieved within a time span of less than 25 ms, less than 20 ms, less than 10 ms, less than 7 ms, less than 5 ms, less than 3 ms, less than 2 ms or even less than 1 ms.
- By use of a pivoting anchor valve in an open position a large flow rate and/or a large valve cross-section or transitional cross-section can be provided.
   Preferably, the transitional cross-section of the pivoting anchor valve in an open position at least equals the inner cross-section of the supply tube connected to the supply port of the pivoting anchor valve. Accordingly, if the supply tube has an inner cross-section with a diameter of 5 mm, the transitional cross-section of the pivoting anchor valve in the open position is at least 0.2 cm².
   Preferably, in an open position the transitional cross-section or valve cross-section is at least 0,3 cm², at least 0,4 cm², at least 0,5 cm², at least 0,6 cm² or even at least 0,8 cm².
- Due to the pivoting of the pivot anchor the valve body closing the valve seat is pivoted between the closed position and the open position. Accordingly, the transitional cross-section in the open position corresponds to the outer circumference of a cylinder cut in two non-parallel planes wherein these planes form an angle that corresponds to the pivot angle of the pivot anchor between the open position and the closed position. In particular the pivot angle and the angle between these planes is in the range of 1° to 5° or 2° to 4°.
- The (averaged) movement of the valve body formed by the pivoting anchor or connected thereto between one valve position and the adjacent valve position is in the range of 0.5 to 5 mm, in particular 1.0 to 4 mm.
- When controlling a pivoting anchor valve of this type, there might be only a short delay due to the inertial mass of the moved valve elements, in particular a delay or dead time being smaller than 4 ms, smaller than 2 ms or even less than 1 ms.
- It is possible that the pivoting anchor valve comprises more than one stable operating position. The pivoting anchor valve might e.g. be bi-stable or multi-stable. This might e.g. be provided in the way that in two or more operating positions the pivoting anchor or a component connected therewith contacts a permanent magnet (cp. the patent publications EP 2 756 215 B1, EP 2 049 373 B1, EP 2 567 131 B1 and EP 1 303 719 B1 and the patent applications with the application numbers GB 1 719 309.5, GB 1 904 957.6, GB 1 820 137.6, GB 1 806 527.6, GB 1 719 415.0 and GB 1 719 344.2). However, it is also possible that bi-stable operating positions are provided by a mechanical spring element which e.g. biases the pivoting anchor or a valve element connected therewith from an unstable middle equilibrium position in both directions towards stable operating positions as disclosed in the publications WO 2016/062542 A1 or EP 3 222 897 A1. Furthermore, it is possible that a stable position is provided by the bending stiffness of the flexible element or pivoting anchor.
- The pivoting anchor valve might be an electrically controlled pneumatic valve without pneumatic pilot having a single stable state, two or more stable states when not being electrically energized.
- For the pivoting anchor valve the pneumatic control bandwidth is primarily determined by the mechatronic design and actuator size or control volume

Within the frame of the invention, the pivoting anchor valve might be embodied as a 2/2-way valve, 3/2-way valve, 3/3-way valve or any other valve having any number of ports and/or switching states. It is also possible that a plurality of redundant pivoting anchor valves are arranged in one constructional unit and/or a combination of a plurality of pivoting anchor valves that are arranged in pneumatical parallel connection or in series connection are arranged in a constructional unit (e.g. a combination of a 3/2-way valve and a 2/2-way valve; e.g. a connection of a pressurized inlet line to the outlet for the service brake cylinder via a first 2/2-way valve as well as a connection of a de-aerating port to the outlet for the service brake cylinder via a second 2/2-way valve). It is possible that a pivoting anchor valve which is pivoted into different operating positions due to the bending of the pivoting anchor or an associated holding element is partially transferred from one operating position of the pivoting anchor valve into another operating position of the pivoting anchor valve by energy which is stored by the bending of the pivoting anchor or the associated holding element. In this way, then for achieving the desired operating positions by means of at least one electromagnet only the required additional energy for arriving at the other operating position has to be provided.

As mentioned above the driver's brake demand might be manually created e. g. by a brake switch having positions "brake actuated" and "brake not actuated" or intermediate steps for a partial brake actuation or continuous brake demand positions. For one embodiment of the invention the driver's brake demand is created by the depression of a foot brake pedal by the driver. The brake pedal in particular moves a valve element that creates the pneumatic brake pressure or a pneumatic brake control pressure. Additionally, the foot brake pedal movement can be sensed by an electric sensor where the sensor signal is then processed in the electro-pneumatic brake path.

For one embodiment of the invention in the pneumatic brake path a relay valve is used. The relay valve comprises a control port which is biased by a brake pedal control pressure. The brake pedal control pressure is controlled or created by the movement of the foot brake pedal. The relay valve then creates the pneumatic brake pressure dependent on the brake pedal control pressure. The created brake pressure is (in particular directly without the interposition of any pressure modifying pneumatic component) transferred to the pneumatic brake actuator via the fail-safe valve when the fail-safe valve is in the second switching state.

For one embodiment of the invention the fail-safe valve is not only connected to the pneumatic brake actuator arranged at one wheel end of a vehicle axle. Instead, for this embodiment the fail-safe valve is also connected to another pneumatic brake actuator arranged at another wheel end of the same vehicle axle. Accordingly, for this embodiment it is possible to use the electro-pneumatic brake path in the first switching state of the fail-safe valve and the pneumatic brake path or redundancy brake path in the second switching state of the fail-safe valve for biasing both pneumatic brake actuators of one vehicle axle with a brake pressure.

Also for an alternative embodiment a second pneumatic brake actuator is arranged at a second wheel end of the vehicle axle. However, in this case a second electro-pneumatic brake path is provided which generates a second electro-pneumatic brake pressure dependent on a second electric brake control signal. In this case, a pneumatic brake line of the pneumatic brake path or redundancy brake path branches into a pneumatic brake line branch and a second pneumatic brake line branch. Here, the pneumatic brake line branch is connected to the fail-safe valve whereas the second pneumatic brake line branch is connected to a second fail-safe valve. The second fail-safe valve (similar to the (first) fail-safe valve) comprises two switching states. In the first switching state the second fail-safe valve connects the second electro-pneumatic brake path to the second pneumatic brake actuator so that the second pneumatic brake actuator is controlled by the second electric brake control signal. Instead, in the second switching state the second fail-safe valve connects the second pneumatic brake line branch to the second pneumatic brake actuator so that the second pneumatic brake actuator is mechanically-pneumatically controlled by the driver's brake demand. Similar to the (first) fail-safe valve also the second fail-safe valve comprises a second electric control port and a second return means. By an energization of the second electric control port it is possible to transfer the second fail-safe valve into the first switching state whereas for a de-energization of the second electric control port the second return means returns the second fail-safe valve into the second switching state. This embodiment of the invention in particular allows the following functionalities:
- In the case of an electric power failure or an electric power reduction the fail-safe valve take the second switching states. Despite of the power failure the (first) pneumatic brake actuator and the second pneumatic brake actuator can be mechanically-pneumatically controlled by the driver's brake demand and by use of the pneumatic brake path. At least a reduced functionality can be upheld.
- In the case that it is detected that in one of the electro-pneumatic brake paths there is a failure or reduced functionality, it is possible to de-energize the associated fail-safe valve so that the associated pneumatic brake actuator is no longer controlled by the associated electro-pneumatic brake path but can be controlled by the pneumatic brake path or redundancy brake path. In this case the other pneumatic brake actuator can still be operated by the functioning electro-pneumatic brake path or also the fail-safe valve associated with this other pneumatic brake actuator can be switched into the second switching state so that both pneumatic brake actuators are controlled via the pneumatic brake path or redundancy brake path.

The invention also proposes that a (first) wheel end controller is associated with the (first) wheel end and controls the (first) fail-safe valve whereas a second wheel end controller is associated with the second wheel end and controls the second fail-safe valve. In this case, the two wheel end controllers can be configured for individually energizing or de-energizing the associated fail-safe valve and second fail-safe valve. Accordingly, it is possible to selectively switch the bias of a specific pneumatic brake actuator from the electro-pneumatic brake path to the pneumatic brake path or redundancy brake path (and vice versa). It is possible that the wheel end controllers are arranged at the associated wheel end, e. g. at a distance of less than 1 m from the wheel end or the brake actuator of the wheel end.

The inventive brake system might comprise an autonomous vehicle driving system.
- The level of the autonomous vehicle driving system might be a "conditional automation" wherein the driver is a necessity but it is not required for the driver to monitor the environment. Further, for this level of automation the driver must be ready to take control of the vehicle at all times with notice.
- For another option the level of the automation is "high automation" wherein the vehicle is capable of performing all driving functions under all certain conditions. Here, the driver may have the option to control the vehicle.
- As another variant also a "full automation" is possible wherein the vehicle is capable of performing all driving functions under all conditions. Also here, the driver may or may not have the option to control the vehicle.

The autonomous vehicle driving system might comprise the following components for providing the required functionality:
- radar sensors that monitor the position of other vehicles and the environment and in particular for allowing a cruise control and the avoidance of a collision with other vehicles, a pedestrians or any obstacle;
- video cameras for detecting traffic lights, for reading road signs, for keeping track of the position of other vehicles, for keeping track of the road and for looking out for the pedestrians and obstacles on the road;
- LIDAR system (light detection and ranging) comprising sensors that bounce pulses of light of the surroundings which are analyzed to identify lane markings and the edges of roads;
- a global positioning system (GPS) communicating with satellites and combined with readings from tachometers, altimeters and gyroscopes to provide more accurate positioning than possible with GPS alone;
- ultrasonic sensors to measure the position of objects very close to the vehicle, such as corbs and other vehicles when parking;
- a central computer or computer network processing the information provided by the sensors and operating parameters of the vehicle and creating the outputs for manipulating the steering, the accelerator and the brakes wherein the central computer comprises control logic for considering the rules of the road (both formal and informal);
- dedicated short-range communications-based receivers and communications devices permitting vehicle to communicate with other vehicles using DSRC with a wireless communication standard that enables reliable data transmission and active safety applications.

For an alternative or cumulative embodiment the inventive brake system comprises an electronic control system which creates the electric brake control signal and/or the second electric brake control signal. Here, control logic is provided which allows a creation of the electric brake control signal and/or the second electrical brake control signal dependent on
- the driver's brake demand and/or
- a wheel slip (e. g. for a traction control) and/or
- a dynamic vehicle stability criterion (in particular basing upon a control of the yaw moment or movement, a tilting moment or movement and/or a nodding movement or moment).

The invention also proposes that a wheel end unit is provided. The wheel end unit might comprise one single housing or might be a modular wheel end unit. The wheel end unit might be supported on a vehicle frame or chassis or on the axle.

The wheel end unit is arranged at the wheel end or close to the wheel end (in particular with a distance of less than 1 m from the wheel end or brake actuator). The invention proposes that
- the fail-safe valve, the electro-pneumatic valve or pivoting anchor valve of the electro-pneumatic brake path and the pneumatic brake actuator,
- the fail-safe valve and the electro-pneumatic valve or pivoting anchor valve of the electro-pneumatic brake path,
- the fail-safe valve and the pneumatic brake actuator,
- the electro-pneumatic valve or pivoting anchor valve of the electro-pneumatic brake path and the pneumatic brake actuator,
- the fail-safe valve,
- the electro-pneumatic valve or pivoting anchor valve of the electro-pneumatic brake path or
- the pneumatic brake actuator
is/are integrated into or part of the wheel end unit.

The inventive brake system an electronic control system comprises control logic which performs a test procedure. The test procedure is e.g. triggered by the start of an engine (e. g. by the actuation of the ignition). For a first variant of the invention the test procedure tests the operation of the electro-pneumatic brake path (and/or of the second electro-pneumatic brake path). If the test procedure leads to the result that the electro-pneumatic brake path (and/or the second electro-pneumatic brake path) does not work properly or has a malfunction it is possible to switch the fail-safe valve into the second switching position for deactivating the electro-pneumatic brake path. Within the frame of the invention any test procedure might be used. For a second variant of the invention the test procedure tests the operation of the redundancy brake path or pneumatic brake path. This is advantageous for guaranteeing that the redundancy brake path or pneumatic brake path is available in the case of a failure of the electro-pneumatic brake path.

For one particular test procedure the control logic creates an electric brake control signal at stillstand of the vehicle and analyses the resulting electro-pneumatic brake pressure. The sensing of the electro-pneumatic brake pressure by a sensor might e. g. be used as follows for deciding if the electro-pneumatic brake path works properly: if the created electro-pneumatic brake pressure correlates with a given dependency to the electric brake control signal, the system works properly. Also the curvature of the resulting electro-pneumatic brake pressure can be compared to a given curvature for an electric brake control test signal for detecting a malfunctioning electro-pneumatic brake path. This test procedure is in particular used at stillstand of the vehicle where the creation of a brake pressure for the test procedure (in some cases additional to a parking brake or other brakes guaranteeing the desired stillstand) does not interfere with the vehicle safety.

Another test procedure can be run in the case that when performing the test procedure the brake actuator is already biased by a brake pressure, in particular for providing a parking brake function. In this case the control logic creates an electric brake control signal for reducing the brake pressure of the brake actuator. The brake pressure is in particular only reduced in the case that the brake pressure is by a difference X above the threshold brake pressure Y that guarantees that the vehicle cannot move. The reduction of the brake pressure (and the corresponding electric brake control signal) is dimensioned such that after the reduction the brake pressure still equals or is still higher than the requires brake pressure Y for keeping the vehicle at standstill. So, the reduction is smaller than X. Alternatively or cumulatively it is possible that during the reduction of the brake pressure a vehicle speed signal or a wheel speed signal is monitored. In the case that the speed signal indicates that the vehicle or the wheel slightly starts to move the brake pressure reduction is stopped and the brake pressure is increased for again stopping the vehicle.

In the case that the test procedure (also) serves for testing the operation of the redundancy brake path or pneumatic brake path the control logic switches the fail-safe valve into the second switching state so that the redundancy brake path or the pneumatic brake path is connected to the associated brake actuator. The control logic then analyses the brake pressure created by the redundancy brake path or pneumatic brake path.

The invention in particular covers the following embodiments:
In the case that there is a demand of the driver for a brake force which is indicated by a depression of the brake pedal normally the brake force is created in the electro-pneumatic brake path. However, when running the test procedure the fail-safe valve is switched to the second switching state so that the brake pedal via the mechanical-pneumatical path creates the brake pressure. If the pneumatic brake path works properly the resulting brake pressure sensed by a pressure sensor corresponds to the desired brake pressure and correlates with the depression of the brake pedal. It is e. g. possible that the depression of the brake pedal is additionally sensed by a brake pedal sensor and the control unit compares the electric brake pedal signal to the pressure signal measured on the basis of the control via the pneumatic brake path. This test procedure is in particular run at safe conditions of the brake system and the vehicle. It is e. g. possible that the test procedure is run every time the vehicle comes to rest with the brake pedal applied or at certain intervals when the vehicle comes to rest with the brake pedal applied. It is also possible that the test procedure is only executed in this way when the brake pedal is applied and the velocity of the vehicle is lower than a threshold velocity. Furthermore, the execution of the test procedure might depend on the further operational conditions or circumferential conditions. If it is e. g. detected that the road is wet (which might be detected on the basis of the activation of a windscreen wiper, a slip determination at the wheel ends and the like) or in the case of a snowy road or an iced road the execution of the test procedure is skipped.

The corresponding might apply in the case that the redundancy brake path includes an electronic control of the brake pressure.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims which, however, does not apply to the independent claims of the granted patent.

The number of the features mentioned in the claims and in the description is to be understood to cover this exact number and a greater number than the mentioned number without having to explicitly use the adverb "at least". So, if an element is mentioned, this is to be understood such that there is exactly one element or there are two elements or more elements. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

In the following, the invention is further explained and described with respect to preferred exemplary embodiments illustrated in the drawings.
- **Fig. 1**: schematically shows a brake system comprising a pneumatic brake path and two electro-pneumatic brake paths for individually controlling two brake actuators.
- **Fig. 2**: schematically shows a brake system wherein brake actuators of different wheel ends of an axle are commonly controlled by an electro-pneumatic brake path and a redundant pneumatic brake path.
- **Fig. 3**: schematically shows the brake system of Fig. 1 with an additional connecting line connecting the two brake actuators and a valve device arranged in the connecting line.

### DESCRIPTION OF THE DRAWINGS

In the figures the electric lines are schematically shown by dashed and dotted lines.

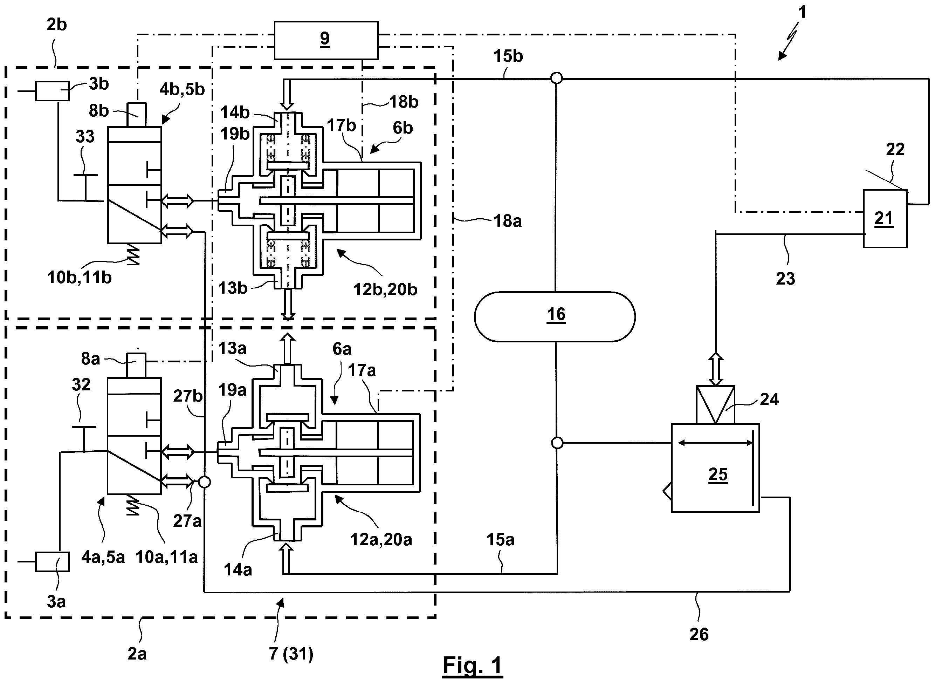

**Fig. 1** shows a brake system 1. The brake system 1 comprises a (first) wheel end unit 2a and a second wheel end unit 2b. In the figures the wheel end units 2 are schematically shown by dashed boxes. The wheel end units 2 are arranged closed to the wheel end and to the wheel at the end of an axle and mounted to the axle or a vehicle chassis or any other support.

In the following the components and interrelations of the components and their function are described for the (first) wheel end unit 2a where the same applies for the second wheel end unit 2b.

The wheel end unit 2a comprises a pneumatic brake actuator 3a. The pneumatic brake actuator 3a might be a service brake cylinder, a parking brake cylinder or a combination brake cylinder of a common design. A brake chamber of the pneumatic brake actuator 3a can alternatively be connected by a fail-safe valve 4a (here a 3/2-solenoid valve 5a) to an electro-pneumatic brake path 6a and a pneumatic brake path 7. If a control port 8a of the fail-safe valve 4 is energized by an electronic control system 9 the fail-safe valve 4a is switched into the first switching state (not effective in Fig. 1) wherein the fail-safe valve 4a connects the electro-pneumatic brake path 6a to the brake actuator 3a. Instead, when not energizing the control port 8a of the fail-safe valve 4a, due to the bias by a return means 10a (here a return spring 11a) the fail-safe valve 4a returns into the second switching state (effective in Fig. 1) wherein the fail-safe valve 4a connects the pneumatic brake actuator 3a to the pneumatic brake path 7.

The electro-pneumatic brake path 6a comprises a control valve 12a which is electrically controlled by the electronic control system 9. The control valve 12a comprises a de-aerating port 13a connected to the atmosphere, a supply port 14a connected by a supply line 15a to a supply reservoir 16 and an electric control port 17 which is connected by a control line 18a to the electronic control system 9. A pneumatic port 19a of the control valve 12a is directly connected to the fail-safe valve 4a. In a closed state of the control valve 12a (effective in Fig. 1) the control valve 12a closes the connection of the fail-safe valve 4a via the port 19a to the deaerating port 13a and the supply port 14a so that in the closed state of the fail-safe valve 4a the chamber of the pneumatic brake actuator 3a is closed and the brake pressure within the chamber is upheld. The closed state of the control valve 12a is in particular taken without an energization of the control port 17 by the electronic control system 9. For a first control signal of the electronic control system 9 biasing the control port 17 the control valve 12a takes an aerating state wherein the control valve 12a connects the fail-safe valve 4a via the port 19 to the supply port 14a and so via the supply line 15a to the supply reservoir 16. Instead, for a second control signal of the electronic control system 9 biasing the control port 17a the control valve 12a is switched to a de-aerating state wherein the fail-safe valve 4a is connected via the port 19a to the deaerating port 13a. The effect of the second control signal opposes the effect of first control signal. Accordingly, in the first switching state of the fail-safe valve 4 the electronic control system 9 is able to aerate or deaerate the brake actuator 3 or to close the connection to the chamber of the brake actuator 3a dependent on the control signals created by the electronic control system 9 and biasing the electric control port 17a.

Preferably, the control valve 12a is embodied as a pivoting anchor valve 20a. The pivoting anchor valve 20a might comprise an anchor supported by a flexure element. For the design and control of the pivoting anchor valve 20a reference is made to the numerous designs of a pivoting anchor valve described above and described in the patent publications with the above specified publication numbers or application numbers.

The pneumatic brake path 7 comprises a brake pedal unit 21 with a foot brake pedal 22 which is depressed by the driver for creating a driver's brake demand. The brake pedal unit 21 creates a brake pedal control pressure in a brake pedal control line 23. The brake pedal control line 23 is connected to a control port 24 of a relay valve 25. The relay valve 25 is connected to the supply reservoir 16 and comprises a de-aerating port. Dependent on the brake pedal control pressure biasing the control port 24 the relay valve 25 creates a pneumatic brake pressure in a pneumatic brake line 26. The pneumatic brake line 26 branches two pneumatic brake line branches 27a, 27b. In the second switching state (effective in Fig. 1) the fail-safe valve 4a connects the pneumatic brake line branch 27a to the pneumatic brake actuator 3a so that the driver's brake demand created by the brake pedal unit 21 controls the brake pressure in the pneumatic brake actuator 3a via the relay valve 25.

The corresponding applies to the second wheel end unit 2b. Here, the components of the second wheel end unit 2b have been denoted with the same reference numerals but with the additional letter b instead of the letter a.

The operation of the brake system 1 of Fig. 1 is as follows:
- In the normal operational mode (no power failure, no malfunction of the electro-pneumatic brake paths 6a, 6b) the control ports 8a, 8b of the fail-safe valves 4a, 4b are energized so that the fail-salve valves 4a, 4b take the first switching states. Accordingly, by a control of the control valves 12a, 12b by the electronic control system 9 it is possible to aerate and deaerate the pneumatic brake actuators 3a, 3b or hold the brake pressure according to the needs (in particular for creating the required brake force, for a slip and traction control, for enhancing the dynamic driving stability, for creating a parking brake force, for initiating an emergency brake action, for allowing an autonomous drive under the control of an autonomous driving system included into the electronic control system 9 or separated therefrom and the like). By a depression of the foot brake pedal 22 of the brake pedal unit 21 the driver's demand is transferred into an electric driver's brake demand which is transmitted to the electronic control system 9. The electronic control system 9 is able to control the control valves 12a, 12b dependent on the electric driver's brake demand.
- In the case of a power failure the control ports 8a, 8b of the fail-safe valves 4a, 4b are deenergized so that the return means 10a, 10b return the fail-safe valves 4a, 4b into the second switching state. Accordingly, the pneumatic brake path 7 controls the pneumatic bias of the pneumatic brake actuators 3a, 3b. The pneumatic brake pressure created in the pneumatic brake line 26 by the relay valve 25 dependent on the depression of the foot brake pedal 22 is transferred via the two pneumatic brake line branches 27a, 27b to the fail-safe valves 4a, 4b which transfer the pneumatic brake pressure to the pneumatic brake actuators3a, 3b. In this redundancy mode both brake actuators 3a, 3b are biased by the same pneumatic brake pressure whereas in the normal operational mode specified above it is possible to control the electro-pneumatic brake pressure in the brake actuators 3a, 3b independently on each other by the independent control of the control valves 12a, 12b.
- In the case that a malfunction of one electro-pneumatic brake path 6a [or 6b] (in particular in malfunction of one of the control valves 12a [or 12b]) which might be detected by a test procedure it is possible to deactivate this electro-pneumatic brake path 6a [6b] by switching the associated fail-safe valve 4a [4b] into the second switching state by de-energizing the associated control port 8a [8b]. In this case the pneumatic brake actuator 3a [3b] associated with the failing electro-pneumatic brake path 6a [6b] can be controlled by the pneumatic brake path 7 whereas the other pneumatic brake actuator 3b [3a] can still be controlled by the electro-pneumatic brake path 6b [6a]. However, it is also possible that in the case of a failure in one of the electro-pneumatic brake paths 6a, 6b both fail-safe valves 4a, 4b are switched into the second switching state so that both pneumatic brake actuators 3a, 3b are commonly controlled by the pneumatic brake path 7.

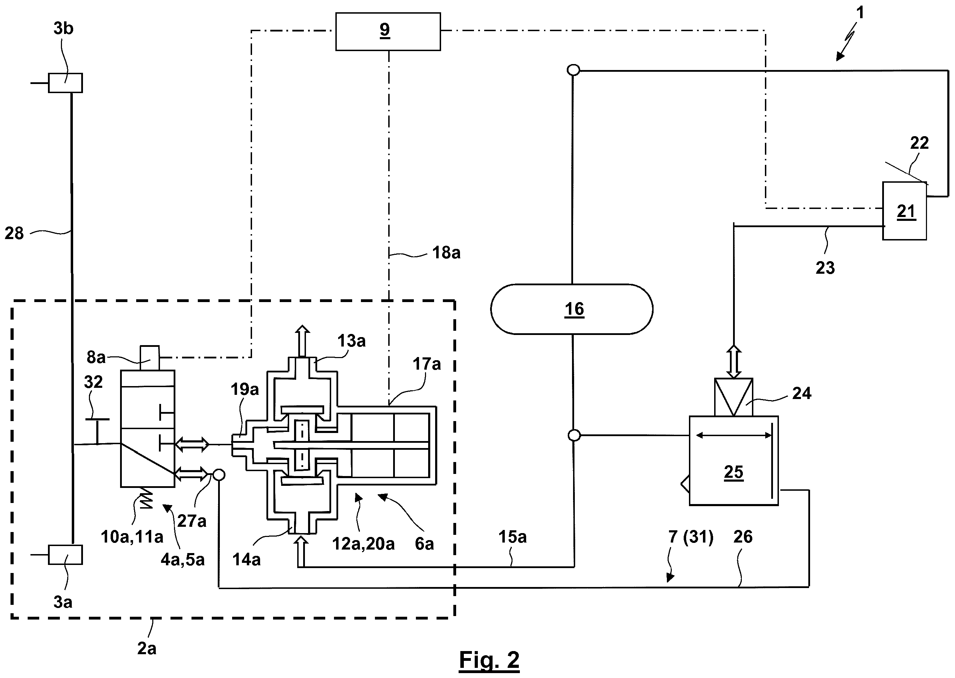

**Fig. 2** shows a modified embodiment with only one fail-safe valve 4a connected to the electro-pneumatic brake path 6a and the pneumatic brake path 7. Here, a connecting line 28 connects the pneumatic brake actuator 3a to the pneumatic brake actuator 3b. The two pneumatic brake actuators 3a, 3b of one axle of the vehicle are commonly controlled by the fail-safe valve 4a, the electro-pneumatic brake path 6a and pneumatic brake path 7 such that the brake actuators 3a, 3b are biased with the same brake pressures.

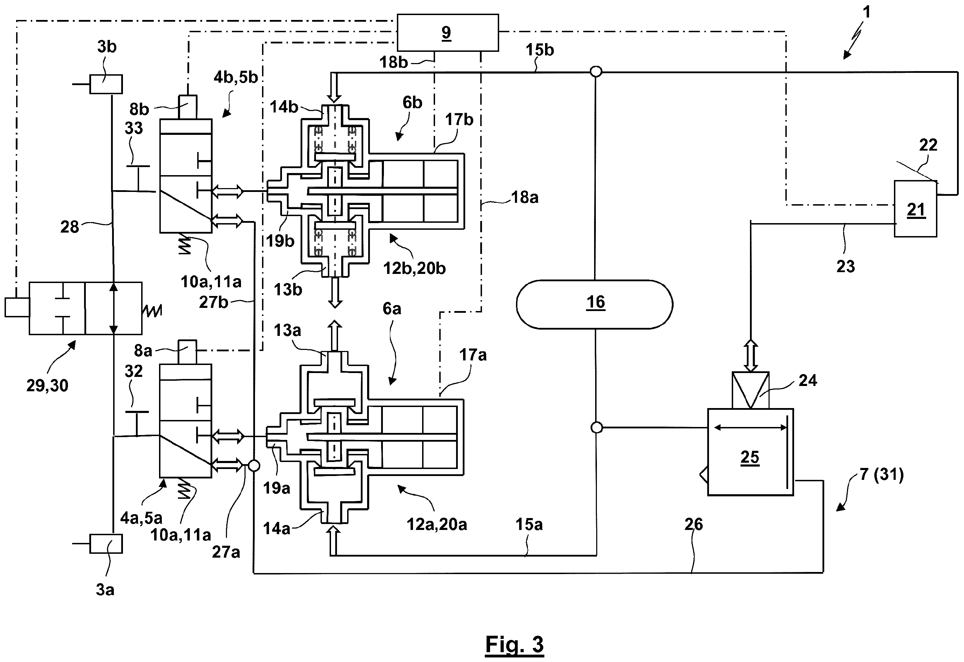

The embodiment shown in **Fig. 3** generally corresponds to the embodiment of Fig. 1. However, also here the brake actuators 3a, 3b are connected to each other by a connecting line 28. However, here a valve device 29 is arranged in the connecting line 28. For the shown embodiment the valve device 29 is a 2/2-solenoid valve 30 controlled by the electronic control system 9 or another electronic control system.

The brake system 1 of Fig. 3 allows the following operation:
- When switching the valve device 29 into its closed position by energizing the valve device 29 the normal operation as explained for the embodiment of Fig. 1 is possible.
- In the case of a failure of one of the electro-pneumatic brake paths 6a [6b] the related control valve 12a [12b] is switched into the closed position or automatically takes its closed position. Both of the fail-safe valves 4a, 4b are controlled into the first switching position and the valve device 29 is switched into the open position. It is then possible to operate the other electro-pneumatic brake path 6b [6a] for creating an electro-pneumatic brake pressure which is transmitted via the related fail-safe valve 4b [4a] to the associated brake actuator 3b [3a] and via the connecting line 28 and the valve device 29 in its open position to the brake actuator 3a [3b]. Accordingly, it is still possible to bias the two brake actuators 3a, 3b with an electronically controlled brake pressure which also allows a brake modulation and other functionalities. However, in this case both brake actuators 3a, 3b are biased with the same electro-pneumatic brake pressure.
- In the case of a power failure the fail-safe valves 4a, 4b return into the second switching state and the valve device 29 takes the open position so that both brake actuators 3a, 3b are controlled via the pneumatic brake path 7.

In Fig. 3 the components have been shown as separate components. However, some or all of these components might be arranged within a wheel end unit 2a, 2b as shown for Fig. 1. Concerning the use of a connecting line 28 and a valve device 29 reference is made to the unpublished European patent application with the application number EP 19 177 982.6 filed on July 15, 2019 with the title "Pneumatic vehicle axle brake assembly".

In the inventive brake system 1 pressure sensors 32, 33 might be used for sensing the pressure in the pneumatic brake actuators 3a, 3b, in the electro-pneumatic brake path 6 and/or in the pneumatic brake path 7. Preferably a pressure sensor 32, 33 is arranged in the line between the fail-safe valve 4a, 4b and the associated brake actuator 3a, 3b. Dependent on the switching position of the fail-safe valve 4a, 4b the pressure sensor 32, 33 can be biased with the pressure in the electro-pneumatic brake path 6a, 6b or in the pneumatic brake path 7. The pressure signals of the pressure sensors 32, 33 are transmitted to the control system 9 and in particular processed and considered within the test procedure.

In the shown embodiments and in the above description the pneumatic brake path 7 wherein the brake pressure is generated mechanically-pneumatically dependent on the depression of the brake pedal by the driver is used as a redundancy brake path 31.

For another variant covered by the invention in the redundancy brake path 31 the brake pressure is not generated mechanically-pneumatically but (also) electro-pneumatically. To mention only a one non-limiting example, in the redundancy brake path 31 the brake pressure transmitted to the fail-safe valve 4 can be generated by an electronically controlled solenoid valve or pilot valve. In this case the electronic control signal for the solenoid valve or pilot valve might be generated by a control system 9 dependent on an electric sensor signal that senses the depression of the brake pedal and/or dependent on an autonomous driving system.

### LIST OF REFERENCE NUMERALS

- 1: brake system
- 2: wheel end unit
- 3: pneumatic brake actuator
- 4: fail-safe valve
- 5: 3/2-solenoid valve
- 6: electro-pneumatic brake path
- 7: pneumatic brake path
- 8: control port
- 9: electronic control system
- 10: return means
- 11: return spring
- 12: control valve
- 13: deaerating port
- 14: supply port
- 15: supply line
- 16: supply reservoir
- 17: electric control port
- 18: control line
- 19: pneumatic port
- 20: pivoting anchor valve
- 21: brake pedal unit
- 22: foot brake pedal
- 23: brake pedal control line
- 24: control port
- 25: relay valve
- 26: pneumatic brake line
- 27: pneumatic brake line branch
- 28: connecting line
- 29: valve device
- 30: 2/2-solenoid valve
- 31: redundancy brake path
- 32: pressure sensor
- 33: pressure sensor

## Claims

1. A brake system (1) for a commercial vehicle, the brake system (1) preferably comprising a vehicle axle with at least one wheel end, the brake system (1) comprising
a) a pneumatic brake actuator (3a) arranged or arrangeable at a wheel end of a vehicle axle,
b) an electro-pneumatic brake path (6a) generating an electro-pneumatic brake pressure dependent on an electric brake control signal and
c) a redundancy brake path (31),
d) a fail-safe valve (4a) which
da) in a first switching state connects the electro-pneumatic brake path (6a) to the pneumatic brake actuator (3a) so that the pneumatic brake actuator (3a) is controlled by the electric brake control signal and
db) in a second switching state connects the redundancy brake path to the pneumatic brake actuator (3a) so that the pneumatic brake actuator (3a) is controlled by the redundancy brake path (31) and
dc) comprises an electric control port (8a) and
dd) is transferred into the first switching state by energizing the electric control port (8a) and
de) comprises a return means (10a) which returns the fail-safe valve (4a) from the first switching state into the second switching state when the electric control port (8a) is not energized
e) an electronic control system (9)
**characterized in that**
e) the electronic control system (9) comprises control logic which performs a test procedure for testing the operation
ea) of the electro-pneumatic brake path (6a; 6b) and/or
eb) of the redundancy brake path (31) or a pneumatic brake path.

2. The brake system (1) of claim 1, **characterized in that**
a) the redundancy brake path (31) is a pneumatic brake path (7) wherein a pneumatic brake pressure is generated mechanically-pneumatically dependent on a driver's brake demand and
b) in the second switching state the fail-safe valve (4a) connects the pneumatic brake path (7) to the pneumatic brake actuator (3a) so that the pneumatic brake actuator (3a) is mechanically-pneumatically controlled by the driver's brake demand.

3. The brake system (1) of claim 1 or 2, **characterized in that** the fail-safe valve (4a) is a 3/2-solenoid valve (5a).

4. The brake system (1) of one of the preceding claims, **characterized in that** electro-pneumatic brake path (6a) comprises a pivoting anchor valve (20a).

5. The brake system (1) of one of the preceding claims, **characterized in that** the driver's brake demand is created via a brake pedal unit (21).

6. The brake system (1) of claim 5, **characterized in that**
a) the brake pedal unit (21) controls a brake pedal control pressure,
b) the brake pedal control pressure biases a control port (24) of a relay valve (25) and
c) dependent on the brake pedal control pressure the relay valve (25) generates the pneumatic brake pressure which is transferred to the pneumatic brake actuator (3a) via the fail-safe valve (4a) when the fail-safe valve (4a) is in the second switching state.

7. The brake system (1) of one of the preceding claims, **characterized in that** a port of the fail-safe valve (4a) which is connected to the pneumatic brake actuator (3a) is also connected to another pneumatic brake actuator (3b) arranged or arrangeable at another wheel end of the vehicle axle.

8. The brake system (1) of one of claims 1 to 6, **characterized in that**
a) a second pneumatic brake actuator (3b) is arranged or is arrangeable at a second wheel end of the vehicle axle,
b) a second electro-pneumatic brake path (6b) generates a second electro-pneumatic brake pressure dependent on a second electric brake control signal,
c) a pneumatic brake line (26) of the redundancy brake path (31) or pneumatic brake path (7) branches into a pneumatic brake line branch (27a) and a second pneumatic brake line branch (27b), the pneumatic brake line branch (27a) being connected to the fail-safe valve (4a) and the second pneumatic brake line branch (27b) being connected to a second fail-safe valve (4b) which
ca) in a first switching state connects the second electro-pneumatic brake path (6b) to the second pneumatic brake actuator (3b) so that the second pneumatic brake actuator (3b) is controlled by the second electric brake control signal and
cb) in a second switching state connects the second pneumatic brake line branch (27b) to the second pneumatic brake actuator (3b) so that the second pneumatic brake actuator (3b) is mechanically-pneumatically controlled by the driver's brake demand or controlled by the redundancy brake path (31) and
cc) comprises a second electric control port (8b) and
cd) is transferred into the first switching state by energizing the second electric control port (8b) and
ce) comprises a second return means (10b) which returns the second fail-safe valve (4b) from the first switching state into the second switching state when the second electric control port (8b) is not energized.

9. The brake system (1) of claim 8, **characterized in that**
a) a wheel end controller is associated with the wheel end and controls the fail-safe valve (4a),
b) a second wheel end controller is associated with the second wheel end and controls the second fail-safe valve (4b) and
c) the wheel end controller and the second wheel end controller are configured for individually energizing or de-energizing the associated fail-safe valve (4a) and second fail-safe valve (4b).

10. The brake system (1) of one of the preceding claims, **characterized in that** an autonomous vehicle driving system is provided which
a) creates the electric brake control signal for controlling the electro-pneumatic brake pressure in the electro-pneumatic brake path (6a) and/or
b) creates the second electric brake control signal for controlling the second electro-pneumatic brake pressure in the second electro-pneumatic brake path (6b).

11. The brake system (1) of one of the preceding claims, **characterized in that** an electronic control system (9) is provided which
a) creates the electric brake control signal for controlling the electro-pneumatic brake pressure in the electro-pneumatic brake path (6a) and/or
b) creates the second electric brake control signal for controlling the second electro-pneumatic brake pressure in the second electro-pneumatic brake path (6b) dependent on the driver's brake demand and/or a wheel slip and/or a dynamic vehicle stability criterion.

12. The brake system (1) of one of the preceding claims, the brake system (1) preferably comprising a wheel end unit (2a; 2b), **characterized in that**
a) the fail-safe valve (4a; 4b) and/or
b) an electro-pneumatic control valve (12a; 12b) or pivoting anchor valve (20a; 20b) of the electro-pneumatic brake path (6a; 6b) and/or
c) the pneumatic brake actuator (3a; 3b) is/are supported or can be supported on the vehicle axle of the commercial vehicle and/or arranged or arrangeable in the wheel end unit (2a; 2b).

13. The brake system (1) of one of claims 1 to 12, **characterized in that** an electronic control system (9) comprises control logic which triggers the run of the test procedure at the start of an engine of the vehicle or at standstill.

14. The brake system (1) of one of claims 1 to 13, **characterized in that** in the test procedure the control logic
a) creates an electric brake control signal and
b) analyses the resulting electro-pneumatic brake pressure.

15. The brake system (1) of one of claims 1 to 14, **characterized in that** in cases where at the start of the test procedure the brake actuator (3a; 3b) is biased by a brake pressure the control logic
a) creates an electric brake control signal for reducing the brake pressure of the brake actuator (3a; 3b) and
b) analyses the resulting electro-pneumatic brake pressure.

16. The brake system (1) of one of claims 1 to 15, **characterized in that** the control logic performs a test procedure for testing the operation of the redundancy brake path (31) or pneumatic brake path (7) by
a) switching the fail-safe valve (4a; 4b) into the second switching state and
b) analyzing the brake pressure created by the redundancy brake path (31) or pneumatic brake path (7).

17. The brake system (1) of one of the preceding claims, **characterized in that** a pressure sensor is provided which is arranged between the fail-safe valve (4a; 4b) and the associated brake actuator (3a; 3b).

## Patentansprüche

1. Bremssystem (1) für ein Nutzfahrzeug, wobei das Bremssystem (1) vorzugsweise eine Fahrzeugachse mit zumindest einem Radende aufweist, wobei das Bremssystem (1) aufweist
a) einen pneumatischen Bremsaktuator(3a), der an einem Radende der Fahrzeugachse angeordnet ist oder werden kann,
b) einem elektro-pneumatischen Bremspfad (6a), der in Abhängigkeit von einem elektrischen Bremssteuersignal oder Bremsregelsignal einen elektro-pneumatischen Bremsdruck erzeugt, und
c) einem Redundanz-Bremspfad (31),
d) einem Ausfallsicherungs-Ventil (4a), welches
da) in einem ersten Schaltzustand den elektro-pneumatischen Bremspfad (6a) mit dem pneumatischen Bremsaktuator(3a) verbindet, sodass der pneumatische Bremsaktuator (3a) durch das elektrische Bremssteuersignal oder Bremsregelsignal gesteuert oder geregelt wird, und
db) in einem zweiten Schaltzustand den Redundanz-Bremspfad mit dem pneumatischen Bremsaktuator (3a) verbindet, sodass der pneumatische Bremsaktuator (3a) durch den Redundanz-Bremspfad (31) gesteuert oder geregelt wird, und
dc) einen elektrischen Steueranschluss (8a) aufweist und
dd) durch elektrischen Beaufschlagung des elektrischen Steueranschlusses (8a) in den ersten Schaltzustand überführt wird und
de) ein Rückstellmittel (10a) aufweist, welches das Ausfallsicherungs-Ventil (4a) von dem ersten Schaltzustand in den zweiten Schaltzustand zurückführt, wenn der elektrische Steueranschluss (8a) nicht elektrisch beaufschlagt wird,
e) einem elektronischen Steuersystem oder Regelsystem (9),
**dadurch gekennzeichnet, dass**
e) das elektronische Steuersystem oder Regelsystem (9) Steuerlogik aufweist, welche ein Testverfahren ausführt zum Testen des Betriebs
ea) des elektro-pneumatischen Bremspfades (6a; 6b) und/oder
eb) des Redundanz-Bremspfades (31) oder eines pneumatischen Bremspfades.

2. Bremssystem (1) nach Anspruch 1, **dadurch gekennzeichnet, dass**
a) der Redundanz-Bremspfad (31) ein pneumatischer Bremspfad (7) ist, in dem ein pneumatischer Bremsdruck mechanisch-pneumatisch erzeugt wird in Abhängigkeit von einer Bremsanforderung des Fahrers, und
b) in dem zweiten Schaltzustand das Ausfallsicherung-Ventil (4a) den pneumatischen Bremspfad (7) mit dem pneumatischen Bremsaktuator (3a) verbindet, sodass der pneumatische Bremsaktuator (3a) mechanisch-pneumatisch durch die Bremsanforderung des Fahrers gesteuert oder geregelt wird.

3. Bremssystem (1) nach Anspruch 1 oder 2, **dadurch gekennzeichnet, dass** das Ausfallsicherungs-Ventil (4a) ein 3/2-Magnetventil (5a) ist.

4. Bremssystem (1) nach einem der vorhergehenden Ansprüche, **dadurch gekennzeichnet, dass** der elektro-pneumatische Bremspfad (6a) ein Schwenkankerventil (20) aufweist.

5. Bremssystem (1) nach einem der vorhergehenden Ansprüche, **dadurch gekennzeichnet, dass** die Bremsanforderung des Fahrers mittels einer Bremspedaleinheit (21) erzeugt wird.

6. Bremssystem (1) nach Anspruch 5, **dadurch gekennzeichnet, dass**
a) die Bremspedaleinheit (21) einen Bremspedal-Steuerdruck steuert oder regelt,
b) der Bremspedal-Steuerdruck einen Steueranschluss (24) eines Relais-Ventils (25) beaufschlagt und
c) in der Abhängigkeit von dem Bremspedal-Steuerdruck das Relais-Ventil (25) den pneumatischen Bremsdruck erzeugt, der über das Ausfallsicherungs-Ventil (4a) an den pneumatischen Bremsaktuator (3a) übertragen wird, wenn sich das Ausfallsicherungs-Ventil (4a) in dem zweiten Schaltzustand befindet.

7. Bremssystem (1) nach einem der vorhergehenden Ansprüche, **dadurch gekennzeichnet, dass** ein Anschluss des Ausfallsicherungs-Ventils (4a), der mit dem pneumatischen Bremsaktuator (3a) verbunden ist, auch mit einem weiteren pneumatischen Bremsaktuator (3b) verbunden ist, der an einem anderen Radende der Fahrzeugachse angeordnet ist oder angeordnet werden kann.

8. Bremssystem (1) nach einem der Ansprüche 1 bis 6, **dadurch gekennzeichnet, dass**
a) ein zweiter pneumatischer Bremsaktuator (3b) an dem zweiten Radende der Fahrzeugachse angeordnet ist oder angeordnet werden kann,
b) ein zweiter elektro-pneumatischer Bremspfad (6b) in Abhängigkeit von einem zweiten elektrischen Bremssteuersignal oder Bremsregelsignal einen zweiten elektro-pneumatischen Bremsdruck erzeugt,
c) eine pneumatische Bremsleitung (26) des Redundanz-Bremspfades (31) oder des pneumatischen Bremspfades (7) verzweigt in einen pneumatischen Bremsleitungszweig (27a) und einen zweiten pneumatischen Bremsleitungszweig (27b), wobei der pneumatischen Bremsleitungszweig (27a) mit dem Ausfallsicherungs-Ventil (4a) verbunden ist und der zweite pneumatische Bremsleitungszweig (27b) mit einem zweiten Ausfallsicherungs-Ventil (4b) verbunden ist, welches
ca) in einem ersten Schaltzustand den zweiten elektro-pneumatischen Bremspfad (6b) mit dem zweiten pneumatischen Bremsaktuator (3b) verbindet, sodass der zweite pneumatische Bremsaktuator (3b) durch das zweite elektrische Bremssteuersignal oder Bremsregelsignal gesteuert oder geregelt wird, und
cb) in einem zweiten Schaltzustand den zweiten pneumatischen Bremsleitungszweig (27b) mit dem zweiten pneumatischen Bremsaktuator (3b) verbindet, sodass der zweite pneumatische Bremsaktuator (3b) mechanisch-pneumatisch durch die Bremsanforderung des Fahrers gesteuert oder geregelt wird oder durch den Redundanz-Bremspfad (31) gesteuert oder geregelt wird und
cc) einen zweiten elektrischen Steueranschluss (8b) aufweist und
cd) durch elektrische Beaufschlagung des zweiten elektrischen Steueranschlusses (8b) in den ersten Schaltzustand überführt wird und
ce) ein zweites Rückstellmittel (10b) aufweist, welches das zweite Ausfallsicherungs-Ventil (4b) von dem ersten Schaltzustand in den zweiten Schaltzustand zurückführt, wenn der zweite elektrische Steueranschluss (8b) nicht elektrisch beaufschlagt wird.

9. Bremssystem (1) nach Anspruch 8, **dadurch gekennzeichnet, dass**
a) dem Radende ein Radenden-Controller zugeordnet ist, der das Ausfallsicherungs-Ventil (4a) steuert oder regelt,
b) dem zweiten Radende ein zweiter Radenden-Controller zugeordnet ist, der das zweite Ausfallsicherungs-Ventil (4b) steuert oder regelt, und
c) der Radenden-Controller und der zweite Radenden-Controller geeignet konfiguriert sind für ein individuelles elektrisches Beaufschlagen oder Beseitigen der elektrischen Beaufschlagung des zugeordneten Ausfallsicherungs-Ventils (4a) und des zweiten Ausfallsicherungs-Ventils (4b).

10. Bremssystem (1) nach einem der vorhergehenden Ansprüche, **dadurch gekennzeichnet, dass** ein autonomes Fahrzeugfahrsystem vorhanden ist, welches
a) das elektrische Bremssteuersignal oder Bremsregelsignal erzeugt zur Steuerung oder Regelung des elektro-pneumatischen Bremsdruckes in dem elektro-pneumatischen Bremspfad (6a) und/oder
b) das zweite elektrische Bremssteuersignal oder Bremsregelsignal erzeugt zur Steuerung oder Regelung des zweiten elektro-pneumatischen Bremsdruckes in dem zweiten elektro-pneumatischen Bremspfad (6b).

11. Bremssystem (1) nach einem der vorhergehenden Ansprüche, **dadurch gekennzeichnet, dass** ein elektronisches Steuersystem oder Regelsystem (9) vorhanden ist, welches
a) das elektrische Bremssteuersignal oder Bremsregelsignal zum Steuern oder Regeln des elektro-pneumatischen Bremsdruckes in dem elektro-pneumatischen Bremspfad (6a) und/oder
b) das zweite elektrische Bremssteuersignal oder Bremsregelsignal zur Steuerung oder Regelung des zweiten elektro-pneumatischen Bremsdruckes in dem zweiten elektro-pneumatischen Bremspfad (6b)
in Abhängigkeit von der Bremsanforderung des Fahrers und/oder einem Radschlupf und/oder einem Kriterium hinsichtlich der dynamischen Fahrstabilität erzeugt.

12. Bremssystem (1) nach einem der vorhergehenden Ansprüche, wobei das Bremssystem (1) vorzugsweise eine Radenden-Einheit (2a; 2b) aufweist, **dadurch gekennzeichnet, dass**
a) das Ausfallsicherungs-Ventil (4a; 4b) und/oder
b) ein elektro-pneumatisches Steuerventil oder Regelventil (12a; 12b) oder Schwenkankerventil (20a; 20b) des elektro-pneumatischen Bremspfades (6a; 6b) und/oder
c) der pneumatische Bremsaktuator (3a; 3b)
abgestützt sind oder abgestützt werden können auf oder an der Fahrzeugachse des Nutzfahrzeugs und/oder in oder an der Radenden-Einheit (2a; 2b) angeordnet ist/sind oder angeordnet werden kann/können.

13. Bremssystem (1) nach einem der Ansprüche 1 bis 12, **dadurch gekennzeichnet, dass** ein elektronisches Steuersystem oder Regelsystem (9) Steuerlogik aufweist, die bei einem Start eines Motors des Fahrzeugs oder bei einem Stillstand die Durchführung des Testverfahrens auslöst.

14. Bremssystem (1) nach einem der Ansprüche 1 bis 13, **dadurch gekennzeichnet, dass** in dem Testverfahren die Steuerlogik
a) ein elektrisches Bremssteuersignal oder Bremsregelsignal erzeugt und
b) den sich ergebenden elektro-pneumatischen Bremsdruck analysiert.

15. Bremssystem (1) nach einem der Ansprüche 1 bis 14, **dadurch gekennzeichnet, dass** in Fällen, in denen am Start des Testverfahrens der Bremsaktuator (3a; 3b) mit einem Bremsdruck beaufschlagt ist, die Steuerlogik
a) ein elektrisches Bremssteuersignal oder Bremsregelsignal zur Reduzierung des Bremsdrucks des Bremsaktuators (3a; 3b) erzeugt und
b) den resultierenden elektro-pneumatischen Bremsdruck analysiert.

16. Bremssystem (1) nach einem der Ansprüche 1 bis 15, **dadurch gekennzeichnet, dass** die Steuerlogik ein Testverfahren ausführt zum Testen des Betriebs des Redundanz-Bremspfades (31) oder des pneumatischen Bremspfades (7) durch
a) Schalten des Ausfallsicherungs-Ventils (4a; 4b) in den zweiten Schaltzustand und
b) Analysieren des Bremsdrucks, der durch den Redundanz-Bremspfad oder den pneumatischen Bremspfad (7) erzeugt ist.

17. Bremssystem (1) nach einem der vorhergehenden Ansprüche, **dadurch gekennzeichnet, dass** ein Drucksensor vorhanden ist, der zwischen dem Ausfallsicherungs-Ventil (4a; 4b) und dem zugeordneten Bremsaktuator (3a; 3b) angeordnet ist.

## Revendications

1. Système de frein (1) destiné à un véhicule commercial, le système de frein (1) comprenant de préférence un essieu de véhicule avec au moins une extrémité de roue, le système de frein (1) comprenant
a) un actionneur de frein pneumatique (3a) disposé ou qui peut être disposé à une extrémité de roue d'un essieu de véhicule,
b) un trajet de frein (6a) électropneumatique qui génère une pression de frein électropneumatique selon un signal de commande de frein électrique, et
c) un trajet de frein à redondance (31),
d) un clapet à sécurité intégrée (4a) qui
da) dans un premier état de commutation, relie le trajet de frein électropneumatique (6a) à l'actionneur de frein pneumatique (3a) de sorte que l'actionneur de frein pneumatique (3a) soit contrôlé par le signal de commande de frein électrique, et
db) dans un second état de commutation, relie le trajet de frein à redondance à l'actionneur de frein pneumatique (3a) de sorte que l'actionneur de frein pneumatique (3a) soit contrôlé par le trajet de frein à redondance (31), et
dc) comprend un port de commande électrique (8a), et
dd) passe au premier état de commutation en mettant sous tension le port de commande électrique (8a) et
de) comprend un moyen de retour (10a) qui renvoie le clapet à sécurité intégrée (4a) du premier état de commutation au second état de commutation lorsque le port de commande électrique (8a) n'est pas sous tension,
e) un système de commande électronique (9),
**caractérisé en ce que**
e) le système de commande électronique (9) comprend une logique de commande qui exécute une procédure de test destinée à tester le fonctionnement
ea) du trajet de frein électropneumatique (6a; 6b), et/ou
eb) du trajet de frein à redondance (31) ou d'un trajet de frein pneumatique.

2. Système de frein (1) selon la revendication 1, **caractérisé en ce que**
a) le trajet de frein à redondance (31) est un trajet de frein pneumatique (7) sur lequel une pression de frein pneumatique est générée mécaniquement/pneumatiquement selon une demande de freinage du conducteur, et
b) dans le second état de commutation, le clapet à sécurité intégrée (4a) relie le trajet de frein pneumatique (7) à l'actionneur de frein pneumatique (3a) de sorte que l'actionneur de frein pneumatique (3a) soit mécaniquement/pneumatiquement contrôlé par la demande de freinage du conducteur.

3. Système de frein (1) selon la revendication 1 ou 2, **caractérisé en ce que** le clapet à sécurité intégrée (4a) est un clapet 3/2-solénoïde (5a).

4. Système de frein (1) selon l'une des revendications précédentes, **caractérisé en ce que** le trajet de frein électropneumatique (6a) comprend une soupape d'ancrage pivotante (20a).

5. Système de frein (1) selon l'une des revendications précédentes, **caractérisé en ce que** la demande de freinage du conducteur est créée via une unité de pédale de frein (21).

6. Système de frein (1) selon la revendication 5, **caractérisé en ce que**
a) l'unité de pédale de frein (21) contrôle une pression de contrôle de pédale de frein,
b) la pression de contrôle de pédale de frein incline un port de commande (24) d'un clapet-relais (25), et
c) selon la pression de contrôle de pédale de frein, le clapet-relais (25) génère la pression de frein pneumatique qui est transférée à l'actionneur de frein pneumatique (3a) via le clapet à sécurité intégrée (4a) lorsque le clapet à sécurité intégrée (4a) se trouve dans le second état de commutation.

7. Système de frein (1) selon l'une des revendications précédentes, **caractérisé en ce qu'**un port du clapet à sécurité intégrée (4a) qui est relié à l'actionneur de frein pneumatique (3a) est également relié à un autre actionneur de frein pneumatique (3b) qui est disposé ou qui peut être disposé à une autre extrémité de roue de l'essieu de véhicule.

8. Système de frein (1) selon l'une des revendications 1 à 6, **caractérisé en ce que**
a) un second actionneur de frein pneumatique (3b) est disposé ou peut être disposé à une seconde extrémité de roue de l'essieu de véhicule,
b) un second trajet de frein électropneumatique (6b) génère une seconde pression de frein électropneumatique selon un second signal de commande de frein électrique,
c) une conduite de frein pneumatique (26) du trajet de frein à redondance (31) ou un trajet de frein pneumatique (7) se ramifie en une section de conduite de frein pneumatique (27a) et une seconde section de conduite de frein pneumatique (27b), la section de conduite de frein pneumatique (27a) étant reliée au clapet à sécurité intégrée (4a) et la seconde section de conduite de frein pneumatique (27b) étant reliée à un second clapet à sécurité intégrée (4b) qui
ca) dans le premier état de commutation, relie le second trajet de frein électropneumatique (6b) au second actionneur de frein pneumatique (3b) de sorte que le second actionneur de frein pneumatique (3b) soit contrôlé par le second signal de commande de frein électrique, et
cb) dans le second état de commutation, relie la seconde section de conduite de frein pneumatique (27b) au second actionneur de frein pneumatique (3b) de sorte que le second actionneur de frein pneumatique (3b) soit mécaniquement/pneumatiquement contrôlé par la demande de freinage du conducteur ou par le trajet de frein à redondance (31), et
cc) comprend un second port de commande électrique (8b), et
cd) passe au premier état de commutation en mettant sous tension le second port de commande électrique (8b), et
ce) comprend un second moyen de retour (10b) qui refait passer le second clapet à sécurité intégrée (4b) du premier état de commutation au second état de commutation lorsque le second port de commande électrique (8b) n'est pas sous tension.

9. Système de frein (1) selon la revendication 8, **caractérisé en ce que**
a) un contrôleur d'extrémité de roue est associé à l'extrémité de roue et contrôle le clapet à sécurité intégrée (4a),
b) un second contrôleur d'extrémité de roue est associé à la seconde roue et contrôle le second clapet à sécurité intégrée (4b), et
c) le contrôleur d'extrémité de roue et le second contrôleur d'extrémité de roue sont configurés pour mettre individuellement sous tension ou hors tension le clapet à sécurité intégrée associé (4a) et le second clapet à sécurité intégrée (4b).

10. Système de frein (1) selon l'une des revendications précédentes, **caractérisé en ce qu'**un système d'entraînement de véhicule autonome est prévu, et
a) crée le signal de commande de frein électrique destiné à contrôler la pression de frein électropneumatique sur le trajet de frein électropneumatique (6a), et/ou
b) crée le second signal de commande de frein électrique destiné à contrôler la seconde pression de frein électropneumatique sur le second trajet de frein électropneumatique (6b).

11. Système de frein (1) selon l'une des revendications précédentes, **caractérisé en ce qu'**un système de commande électronique (9) est prévu, et
a) crée le signal de commande de frein électrique destiné à contrôler la pression de frein électropneumatique sur le trajet de frein électropneumatique (6a), et/ou
b) crée le second signal de commande de frein électrique destiné à contrôler la seconde pression de frein électropneumatique sur le second trajet de frein électropneumatique (6b) selon la demande de freinage du conducteur et/ou un patinage de roues et/ou un critère de stabilité de véhicule dynamique.

12. Système de frein (1) selon l'une des revendications précédentes, le système de frein (1) comprenant de préférence une unité d'extrémité de roue (2a; 2b), **caractérisé en ce que**
a) le clapet à sécurité intégrée (4a; 4b) et/ou
b) une soupape de commande électropneumatique (12a; 12b) ou une soupape d'ancrage pivotante (20a; 20b) du trajet de frein électropneumatique (6a; 6b), et/ou
c) l'actionneur de frein pneumatique (3a; 3b)
est/sont supporté(s) ou peut/peuvent être supporté(s) sur l'essieu de véhicule du véhicule commercial et/ou est/sont disposé(s) ou peut/peuvent être disposé(s) dans l'unité d'extrémité de roue (2a; 2b).

13. Système de frein (1) selon l'une des revendications 1 à 12, **caractérisé en ce qu'**un système de commande électronique (9) comprend une logique de commande qui déclenche le lancement de la procédure de test au démarrage d'un moteur du véhicule ou à l'arrêt.

14. Système de frein (1) selon l'une des revendications 1 à 13, **caractérisé en ce que**, dans la procédure de test, la logique de commande
a) crée un signal de commande de frein électrique, et
b) analyse la pression de frein électropneumatique résultante.

15. Système de frein (1) selon l'une des revendications 1 à 14, **caractérisé en ce que**, lorsqu'au lancement de la procédure de test, l'actionneur de frein (3a; 3b) est incliné par une pression de frein, la logique de commande
a) crée un signal de commande de frein électrique destiné à réduire la pression de frein de l'actionneur de frein (3a; 3b), et
b) analyse la pression de frein électropneumatique résultante.

16. Système de frein (1) selon l'une des revendications 1 à 15, **caractérisé en ce que** la logique de commande exécute une procédure de test destinée à tester le fonctionnement du trajet de frein à redondance (31) ou du trajet de frein pneumatique (7) en
a) faisant passer le clapet à sécurité intégrée (4a; 4b) dans le second état de commutation, et
b) en analysant la pression de frein créée par le trajet de frein à redondance (31) ou le trajet de frein pneumatique (7).

17. Système de frein (1) selon l'une des revendications précédentes, **caractérisé en ce qu'**un capteur de pression est prévu et est disposé entre le clapet à sécurité intégrée (4a; 4b) et l'actionneur de frein associé (3a; 3b).
